(19) Europäisches Patentamt
European Patent Office
Office européen des brevets

(11) Publication number: **0 087 476**
**B1**

(12) **EUROPEAN PATENT SPECIFICATION**

(45) Date of publication of patent specification: **08.01.86**

(51) Int. Cl.[4]: **C 09 K 11/77,** H 01 J 29/20, H 01 J 29/26

(21) Application number: **82902209.4**

(22) Date of filing: **23.07.82**

(86) International application number: **PCT/JP82/00286**

(87) International publication number: **WO 83/00342 03.02.83 Gazette 83/04**

(54) **Display device.**

(30) Priority: **23.07.81 JP 115663/81**
**13.08.81 JP 127104/81**

(43) Date of publication of application: **07.09.83 Bulletin 83/36**

(45) Publication of the grant of the patent: **08.01.86 Bulletin 86/02**

(84) Designated Contracting States: **DE GB NL**

(56) References cited:
**JP-B-73 020 108**
**JP-Y-76 033 154**

**No relevant documents have been disclosed.**

(73) Proprietor: **KASEI OPTONIX, LTD.**
**2-7-18 Hamamatsu-cho Minato-ku**
**Tokyo (JP)**

(72) Inventor: **FUJINO, Shigeo**
**371-2 Nezakama Hiratsuka-shi**
**Kanagawa 254 (JP)**
Inventor: **HASE, Takashi**
**579 Nakano, Ebina-shi**
**Kanagawa 243-04 (JP)**
Inventor: **TOSHINAI, Akio**
**1-29-5 Fujimigaoka Ninomiya-cho**
**Naka-gun Kanagawa 259-01 (JP)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 087 476 B1**

## Description

This invention relates to an electron-excited fluorescent display device including a rare earth phosphor exhibiting sub-linear current density-emission luminance characteristics.

Known electron-excited fluorescent display devices include cathode ray tubes such as multi-colour, projection and high-luminance colour cathode ray tubes, and multi-colour low-velocity electron-excited fluorescent display devices. These display devices include fluorescent screens comprising phosphors, mixed or combined together, so that the screens can emit light corresponding to the characteristics of the phosphors. For example, a multi-colour cathode ray tube of the type recently employed in terminal display units of a computer system and display units of an aircraft control system comprises a fluorescent screen constituted by two phosphors emitting lights of different colours, one exhibiting super-linear, and the other sub-linear excitation energy-emission luminance characteristics when the energy of an excitation electron beam increases (hereinafter simply "superlinearity" and "sublinearity", respectively). In a multi-colour cathode ray tube, the colour of the light emitted from the fluorescent screen is changed by changing the energy of an excitation electron beam.

The energy of the excitation electron beam is changed, either by changing the acceleration potential or by changing the current density. Cathode ray tubes using these techniques are called potential-modulation-type and current-modulation-type multi-colour cathode ray tubes, respectively; they are described in '"Nikkei Electronics" (July 2, 1973) pages 106 to 117, and JP—A—7705525, respectively.

The current modulation-type multi-colour cathode ray tube has the advantage over the potential-modulation-type multi-colour cathode ray tube, that the constructions of its electron gun and electron gun control circuit are very simple, but it is less widely employed for practical use. The reason is that there are few known phosphors exhibiting sufficient superlinearity or sublinearity.

Known phosphors exhibiting superlinearity are a copper and aluminium-activated zinc sulphide green-emitting phosphor (ZnS:Cu,al) containing at least one or iron, cobalt and nickel, and a silver-activated zinc cadmium sulphide green-blue-to-red-emitting phosphor [(Zn,Cd)S:Ag] containing at least one of iron, cobalt and nickel (as is well known, this latter phosphor emits green-to-red light according to the molar ratio of ZnS to CdS). A manganese-activated zinc silicate green-emitting phosphor ($Zn_2SiO_4$:Mn) is a known phosphor exhibiting sublinearity.

In general, in order to widen the range of colour displayed on a multi-colour cathode ray tube, the fluorescent screen is constituted by (i) a combination of red-emitting phosphor exhibiting superlinearity with a green-emitting phosphor exhibiting sublinearity, or (ii) a combination of a green-blue-to-green-emitting phosphor exhibiting superlinearity with a red-emitting phosphor exhibiting sublinearity. The fluorescent screen of a current-modulation multi-colour cathode ray tube might therefore use a combination of the given (Zn.Cd)S:Ag red-emitting phosphor (exhibiting superlinearity) and the given $Zn_2SiO_4$:Mn green-emitting phosphor (exhibiting sublinearity). However, there is no known red-emitting phosphor exhibiting good sublinearity which is suitable for use in combination with the given ZnS:Cu,al green-emitting phosphor or with the given (ZnCd)S:Ag green-blue-to-green-emitting phosphor (both exhibiting superlinearity).

It is already known that a europium-activated rare earty oxysulphide phosphor of the formula

$$(Ln,Eu)_2O_2S$$

in which Ln is selected from Y, Gd, La and Lu, emits yellow-to-red light of high luminance under electron excitation, according to the amount of the Eu activator in the phosphor. For example, a $Y_2O_2S$:Eu phosphor is presently in practical use as a red-emitting component phosphor of a colour television cathode ray tube. As shown in Figure 1, a $(Ln,Eu)_2O_2S$ phosphor exhibits very slight sublinearity.

JP—A—7203321 and JP—A—7203322 disclose lanthanide element-activated rare earth oxysulphide phosphors of the formula

$$M'_{(2-x)}M''_xO_2S$$

in which M' is Y, Gd or La, M'' is a lanthanide element, and 0.0002<x<0.2.

According to the present invention, an electron-excited fluorescent display device comprises a current modulation-type multi-colour cathode ray tube having a current modulation electron gun which can emit an electron beam of variable current density; a non-pattern fluorescent screen on which the electron beam can impinge; and one or more deflection coils for generating a magnetic field in a direction normal to the electron beam, and thereby deflecting the beam and causing excitation of the entire surface of the screen; in which the screen comprises, as the main component thereof, a first phosphor which is a rare earth yellow-to-red-emitting phosphor of the formula

$$(Ln_{l-x-y}, Eu_x,Ce_y)_2O_2S$$

in which Ln is selected from Y, Gd, La and Lu,

$$10^{-4} \leqq x \leqq 9\times10^{-2}$$

and

$$10^{-6} \leqq y \leqq 2\times10^{-3},$$

and which exhibits sub-linear current density emission luminance characteristics when the electron beam current density is increased, and a second phosphor exhibiting an emission colour

different from the first phosphor and linear or super-linear current density omission luminance characteristics when the electron beam current density is increased.

It has been found that, by using a certain amount of Ce as a coactivator with Eu, the first phosphor used in the present invention exhibits better sublinearity than the known $(LnEu)_2O_2S$ phosphor.

In the accompanying drawings:

Figure 1 is a graph of the luminance characteristics exhibited by the $(Ln,Eu)_2O_2S$ phosphor;

Figures 2 to 4 are graphs of characteristics exhibited by the first phosphor as used in accordance with the present invention;

Figure 5 is a schematic sectional view showing a typical embodiment of a current modulation-type multi-colour cathode ray tube; and

Figures 6 and 7 are graphs of characteristics of multi-colour cathode ray tubes in accordance with the present invention.

As raw materials for the first phosphor, the following are used:

(i) yttrium oxide $(Y_2O_2)$, gadolinium oxide $(Gd_2O_3)$, lanthanum oxide $(La_2O_3)$ or lutetium oxide $(Lu_2O_3)$, or a yttrium, gadolinium, lanthanum or lutetium compound capable of being easily converted to $Y_2O_3$, $Gd_2O_3$, $La_2O_3$ or $Lu_2O_3$, respectively, at high temperatures, such as a nitrate, sulphate, carbonate, oxalate or hydroxide,

(ii) europium oxide $(Eu_2O_3)$ or a europium compound capable of being easily converted to $Eu_2O_3$ at high temperatures, such as the nitrate, sulphate, carbonate, oxalate or hydroxide,

(iii) cerium dioxide $(CeO_2)$ or a cerium compound capable of being easily converted to $CeO_2$ at high temperatures, such as the nitrate, sulphate, carbonate, oxalate or hydroxide,

(iv) sulphur (S), and

(v) a flux generally employed in the preparation of an oxysulphide phosphor, for example, an alkali metal salt such as $Na_2CO_3$ or $K_3PO_4$.

Constituents (i) and (iv) are the matrix raw materials. The amounts of constituents (iv) and (v) are respectively 30 to 60 wt % and 5 to 50 wt %, based on the mixture of oxides.

Amounts of the raw materials corresponding to the formula of the product are intimately mixed. The raw material mixture is charged into a heat-resistant vessel such as an alumina or quartz crucible, and fired. The firing is conducted in air at 900 to 1500°C. The firing time is generally from 0.5 to 5 hours, e.g. depending on the amount of the raw material mixture charged into the heat-resistant vessel and the firing temperature. After firing, the fired product is washed and dried to obtain the first phosphor.

Figure 2 is a graph showing the current density-emission luminance relationship exhibited by the

$$Y_{0.94999},Eu_{0.05},Ce_{0.00001})_2O_2S$$

phosphor in accordance with the present invention. In Figure 2, the ordinate indicates the specific luminance of emission with respect to the luminance of emission of the

$$(Y_{0.95},Eu_{0.05})_2O_2S$$

phosphor at each current density value, which is taken as 100%.

From Figure 2, it will be understood that, unlike the

$$(Y_{0.95},Eu_{0.05})_2O_2S$$

phosphor exhibiting very slight sublinear characteristics as shown in Figure 1, the

$$(Y_{0.94999},Eu_{0.05},Ce_{0.00001})_2O_2S$$

phosphor exhibits the marked sublinear characteristics as shown in Figure 2. Further, the sublinearity exhibited by the

$$(Y_{0.94999},Eu_{0.05},Ce_{0.00001})_2O_2S$$

phosphor is much higher than the sublinearity exhibited by the

$$(Y_{0.95},Eu_{0.05})_2O_2S$$

phosphor containing the same Eu activator amount.

The sublinearity exhibited by the phosphor in accordance with the present invention is a function of the Ce activator amount (value y). For example, if the luminance of emission of the

$$(Y_{0.95-y},Eu_{0.05},Ce_y)_2O_2S$$

phosphor when the current density of the excitation electron beams is 0.1 µA/cm$^2$ and 2.0 µA/cm$^2$ is $A_1$ and $B_1$ respectively, the sublinearity exhibited by this phosphor is expressed by $B_1/A_1$ (of course, the sublinearity is higher as the value $B_1/A_1$ is smaller). The sublinearity changes depending on the Ce coactivator amount.

Figure 3 is a graph showing the relationship between the Ce coactivator amount contained in the

$$Y_{0.95-y},Eu_{0.05},Ce_y)_2O_2S$$

phosphor and the sublinearity exhibited by this phosphor. In Figure 3, the sublinearity is indicated in terms of $B_1A_2/A_1B_2$ values on the ordinate. $A_2$ and $B_2$ are the luminance of emission of the

$$(Y_{0.95},Eu_{0.05})_2O_2S$$

phosphor containing the same Eu activator amount as in the

$$(Y_{0.95-y},Eu_{0.05},Ce_y)_2O_2S$$

phosphor at the current density of 0.1 µA/cm$^2$ and 2.0 µA/cm$^2$, respectively.

A $B_1A_2/A_1B_2$ value smaller than 1 means that the sublinearity exhibited by the

$$(Y_{0.95-y},Eu_{0.05},Ce_y)_2O_2S$$

phosphor is higher than the sublinearity exhibited by the

$$(Y_{0.95},Eu_{0.05y})_2O_2S$$

phosphor. A $B_1A_2/A_1B_2$ value larger than 1 means the converse.

As is clear from Figure 3, the sublinearity exhibited by the

$$(Y_{0.95-y},Eu_{0.05},Ce_y)_2O_2S$$

phosphor changes depending on the Ce coactivator amount contained therein. Further, the sublinearity exhibited by the

$$(Y_{0.95-y},Eu_{0.05},Ce_y)_2O_2S$$

phosphor becomes higher than the sublinearity exhibited by the

$$(Y_{0.95},Eu_{0.05})_2O_2S$$

phosphor when the value y, i.e. the Ce coactivator amount, is within the range of

$$10^{-6} \leqq y \leqq 2\times10^{-3}.$$

Based on this finding, the value y is defined within the range of

$$10^{-6} \leqq y \leqq 2\times10^{-3}$$

in the present invention. Particularly, when the value y is within the range of

$$2\times10^{-6} \leqq y \leqq 10^{-3},$$

the

$$(Y_{0.95-y},Eu_{0.05},Ce_y)_2O_2S$$

phosphor exhibits markedly high sublinearity.

Figure 4 is a graph showing the relationship between the Ce coactivator amount contained in the

$$(Y_{0.95-y},Eu_{0.05},Ce_y)_2O_2S$$

phosphor and the luminance of emission of this phosphor. In Figure 4, the luminance of emission is indicated on the ordinate in terms of the relative values with respect to the luminance of emission of the phosphor wherein y=0, i.e. the

$$(Y_{0.95},Eu_{0.05})_2O_2S$$

phosphor, which is taken as 100%. Further, the emission of luminance shown in Figure 4 is the value when the current density of the excitation electron beam is 0.5 $\mu A/cm^2$.

As is clear from Figure 4, the luminance of emission gradually decreases as the Ce coactivator amount is increased. Namely, Ce has a negative effect on the luminance of emission of the phosphor in accordance with the present invention. However, the first phosphor used in accordance with the present invention wherein the Ce coactivator amount y is small maintains sufficiently high luminance of emission.

Figures 2 to 4 show data on the phosphors in which rear earth element Ln constituting the matrix Y. Also for the phosphor in which Ln is Gd, La or Lu and the phosphors in which Ln is two or more of Y, Gd, La and Lu, results similar to those shown in Figures 2 to 4 have been obtained.

In the present invention, from the viewpoint of the luminance of emission or the like, the Eu activator amount (value x) is defined within the range of

$$10^{-4} \leqq x \leqq 9\times10^{-2}.$$

The phosphor wherein the value x is within the aforesaid range emits yellow-to-red light according to the value of x. Particularly, when

$$10^{2} \leqq x \leqq 8\times10^{-2},$$

the first phosphor exhibits emission of red light of good colour purity. Eu scarcely affects the sublinearity exhibited by the phosphor. Further, Ce scarcely affects the emission spectrum (emission colour) of the phosphor. In other words, the emission spectrum of the first phosphor used in the present invention is almost the same as the emission spectrum of a $(Ln,Eu)_2O_2S$ phosphor containing the same Eu activator amount.

The second phosphor used in the invention is preferably a phosphor showing blue-to-green emission. Preferred phosphors of this type and exhibiting superlinearity are a silver-activated zinc cadmium sulphide blue-green-to-green-emitting phosphor [(Zn,Cd)S:Ag] containing at least one of Fe, Co, Ni and V (the emission colour of this phosphor is dependent on the molar ratio of ZnS to CdS), and a copper and aluminium-activated zinc sulphide green-emitting phosphor (ZnS:Cu,Al) containing at least one of Fe, Co, Ni and V. Preferred phosphors or this type and exhibiting linear characteristics are a silver-activated zinc cadmium sulphide blue-green-to-green-emitting phosphor (Zn,Cd)S:Ag, a copper and aluminium-activated zinc sulphide green-emitting phosphor (ZnS:Cu,Al), a copper and aluminium-activated zinc cadmium sulphide green-emitting phosphor

[(Zn,Cd)S:Cu,Al],

a terbium-activated rare earth sulphide green-emitting phosphor

$[(Ln,Tb)_2O_2S$,

in which Ln is at least one of Y, Gd, Ln and Lu], a silver-activated zinc sulphide blue-emitting

phosphor (ZnS:Ag), and a cerium-activated yttrium silicate blue-emitting phosphor ($Y_2SiO_5$:Ce). (Zn,Cd)S:Ag blue-green-to-green-emitting and ZnS:Cu,Al green-emitting phosphors, each containing at least one of Fe, Co and Ni (both phosphors exhibit superlinearity) are particularly preferred.

The fluorescent screen (non-pattern fluorescent screen) of the current modulation-type multi-colour cathode ray tube in accordance with the present invention may have a dual layer construction, one layer constituted by the first phosphor and the other by the second phosphor. Alternatively, the fluorescent screen may be of a single layer comprising a mixture of two phosphors. In the former case, it is preferred that the layer nearer to the electron gun is composed of the first phosphor. In the latter case, it is preferred that the phosphor mixture comprises grains of the first phosphor stuck to the surfaces of grains of the second phosphor. The fluorescent screen of the current modulation-type multi-colour cathode ray tube in accordance with the present invention may be made by conventional fluorescent screen making methods, such as sedimentation coating and rotation coating. Further, a thin film made of a metal such as aluminium is generally positioned on the rear of the fluorescent screen (the surface thereof nearer to the electron gun). The thin metal film may be formed by a conventional thin metal film making method, such as deposition.

Figure 5 shows a so-called "current modulation" electron gun 1 positioned in a cylindrical section of a glass funnel 7 constituting a bulb together with a glass face plate 6. The electron gun 1 emits, with variable current density, an electron beam 2. A fluorescent screen 3 is positioned on the inner surface of the glass face plate 6 so as to stand face-to-face with the electron gun 1. Further a pair of deflecting coils 4 and 4' are positioned between the current modulation electron gun 1 and the fluorescent screen 3, i.e. at the neck portion of the glass funnel 7. The pair of deflecting coils 4 and 4' generates a magnetic field at right angles to the advancing direction of the electron beam 2, and thereby deflects it. The entire surface of the fluorescent screen 3 is thus excited by the electron beam 2, and emits light.

Since the non-pattern fluorescent screen 3 comprises two phosphors, the colour of light emitted from the screen 3 upon excitation with the electron beam 2 changes according to a change in the current density of the electron beam 2. Accordingly, the displayed image observed through a glass face plate 6 can be a multi-coloured image, having colours changed according to changes in the current density of electron beam 2.

On the rear surface of the non-pattern fluorescent screen 3 (i.e. the surface thereof opposite to the glass face plate 6 and nearer to the electron gun 1) is positioned a thin film (backing metal film) 5 made of a metal such as aluminium. The thin metal film 5 is positioned for the purpose of, for example, increasing the luminance of the displayed multi-colour image observed through the glass face plate 6, by reflecting the light emitted inwardly of the cathode ray tube from the fluorescent screen 3, and is not essential to the current modulation-type multi-colour cathode ray tube.

In general, the current modulation-type multi-colour cathode ray tube is provided with a single current modulation electron gun, as shown in Figure 5. There is also known a current modulation-type multi-colour cathode ray tube provided with a plurality of current modulation electron guns.

As mentioned above, a current modulation-type multi-colour cathode ray tube having a construction as explained above with reference to Figure 5 is advantageous over the potential modulation-type multi-colour cathode ray tube, in that the circuit is much simpler.

The following Examples 1 to 3 illustrate first phosphors for use in the present invention. Example 4 illustrates the invention.

Example 1

| | | |
|---|---|---|
| Yttrium oxide | $Y_2O_3$ | 214.5 g |
| Europium oxide | $Eu_2O_3$ | 17.6 g |
| Cerium dioxide | $CeO_2$ | 0.0034 g |
| Sulphur | S | 120 g |
| Sodium carbonate | $Na_2CO_3$ | 80 g |
| Potassium phosphate | $K_3PO_4.3H_2O$ | 20 g. |

The above phosphor raw materials were intimately mixed. The mixture obtained was charged into an alumina crucible, and fired in air at a temperature of 1200 C for two hours. After the firing, the firing product obtained was fully washed with water, and dried. In this way, a

$$(Y_{0.94999}Eu_{0.05},Ce_{0.00001})_2O_2S$$

phosphor was obtained. This phosphor exhibited sublinear current density-emission luminance relationship when the current density of the excitation electron beam was increased. As shown in Figure 3, the sublinearity of the current density-emission luminance relationship of the phosphor was higher than the sublinearity of a

$$(Y_{0.95},Eu_{0.05})_2O_2S$$

phosphor.

Example 2

| | | |
|---|---|---|
| Yttrium oxide | $Y_2O_3$ | 219.0 g |
| Europium oxide | $Eu_2O_3$ | 10.6 g |
| Cerium nitrate | $Ce(NO_3)_3 \cdot 6H_2O$ | 0.0087 g |
| Sulfur | S | 120 g |
| Sodium carbonate | $Na_2CO_3$ | 80 g |
| Potassium phosphate | $K_3PO_4 \cdot 3H_2O$ | 20 g |

A $(Y_{0.96999},Eu_{0.03},Ce_{0.00001})_2O_2S$ phosphor was prepared by using the above phosphor raw materials in the same way as described in Example 1. This phosphor exhibited sublinear current density-emission luminance relationship when the current density of the excitation electron beam was increased. The sublinearity of the current density-emission luminance relationship of this phosphor was higher than the sublinearity of a

$$(Y_{0.97},Eu_{0.03})_2O_2S$$

phosphor.

Example 3

| | | |
|---|---|---|
| Yttrium oxide | $Y_2O_3$ | 158.0 g |
| Gadolinium oxide | $Gd_2O_3$ | 79.8 g |
| Europium oxide | $Eu_2O_3$ | 28.2 g |
| Cerium dioxide | $CeO_2$ | 0.034 g |
| Sulfur | S | 120 g |
| Sodium carbonate | $Na_2CO_3$ | 80 g |
| Potassium phosphate | $K_3PO_4 \cdot 3H_2O$ | 20 g |

A $(Y_{0.6999},Gd_{0.22},Eu_{0.08},Ce_{0.0001})_2O_2S$ phosphor was prepared by using the above phosphor raw materials in the same way as described in Example 1. This phosphor exhibited sublinear current density-emission luminance relationship when the current density of the excitation electron beam was increased. The sublinearity of the current density-emission luminance relationship of this phosphor was higher than the sublinearity of a

$$(Y_{0.7},Gd_{0.22},Eu_{0.08})_2O_2S$$

phosphor.

Example 4

A current modulation type multi-color cathode ray tube having the construction as shown in Figure 5 and provided with a fluorescent screen comprising a phosphor mixture containing a

$$(Y_{0.94999},Eu_{0.05},Ce_{0.00001})_2O_2S$$

red emitting phosphor and a (Zn,Cd)S:ag green emitting phosphor containing nickel (as described above, this phosphor exhibits the superlinear circuit current density-emission luminance relationship) in a weight ratio of 3:2 was made according to the ordinary making method for current modulation type multi-color cathode ray tubes. The fluorescent screen was made by the sedimentation coating method.

Figure 6 is a graph showing a change in the emission spectrum of the thus obtained current modulation type multi-color cathode ray tube in accordance with the present invention as the current density of the electron beam has increased. Curves a, b, c, d, e, f and g indicate the emission spectra obtained when the current density was 0.1 μA/cm², 0.2 μA/cm², 0.5 μA/cm², 1.0 μA/cm², 2.0 μA/cm², 3.0 μA/cm² and 4.0 μA/cm² respectively (the acceleration potential for the electron beam was 25 kV in every case). In Figure 6, the intensity of emission is indicated on the ordinate in terms of the relative values with respect to the intensity of emission at the main emission peak of the

$$(Y_{0.94999},Eu_{0.05},Ce_{0.00001})_2O_2S$$

red emitting phosphor, which is taken as 1. As is clear from Figure 6, the proportion of the intensity of emission of the

(Zn,Cd)S:Ag

green emitting phosphor containing nickel with respect to the intensity of emission of the

$$(Y_{0.94999},Eu_{0.05},Ce_{0.00001})_2O_2s$$

red emitting phosphor increases as the current density of the electron beam is increased. Consequently, the emission color of the cathode ray tube changes as the current density of the electron beam is increased.

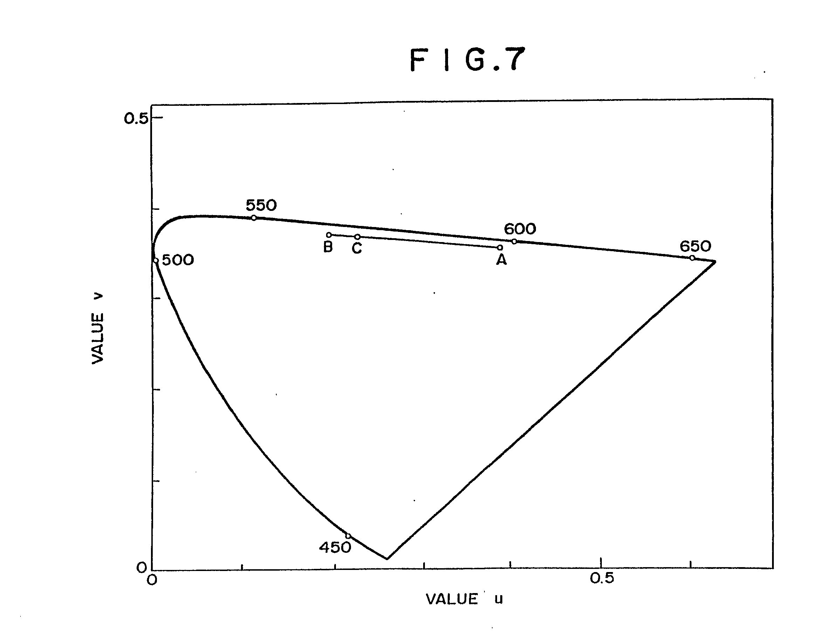

Figure 7 is a graph showing a change in the emission color of the above-described current modulation type multi-color cathode ray tube in accordance with the present invention as the current density of the electron beam is increased, on the UCS chromaticity diagram. In Figure 7, a chromaticity point A (u=0.3891, v=0.3568) indicates the emission color of the cathode ray tube when the current density of the electron beam is 0.1 μA/cm² (the emission spectrum of the cathode ray tube is indicated by the curve a in Figure 6), and a chromaticity point B (u=0.1950, v=0.3721) indicates the emission color of the cathode ray tube when the current density of the electron beam is 4.0 μA/cm² (the emission spectrum of the cathode ray tube is indicated by the curve g in Figure 6). As shown in Figure 7, the emission color of the above-described current modulation type multi-color cathode ray tube in accordance with the present invention changes

from the chromaticity point A (red) to the chromaticity point B (yellow-green) when the current density of the electron beam increases from 0.1 μA/cm$^2$ to 4.0 μA/cm$^2$.

In Figure 7, a chromaticity point C (u=0.2247, v=0.3699) indicates the emission color, at a current density of electron beam of 4.0 μA/cm$^2$, of a current modulation type multi-color cathode ray tube made in the same way as the above-described current modulation type multi-color cathode ray tube in accordance with the present invention, except that a

$$(Y_{0.95},Eu_{0.05})_2O_2S$$

red emitting phosphor having the same Eu activator amount and consequently exhibiting the same emission color as those in the aforesaid

$$(Y_{0.94999},Eu_{0.05},Ce_{0.00001})_2O_2S$$

red emitting phosphor is used, instead of this phosphor, as the phosphor exhibiting the sub-linear current density-emission luminance relationship. The emission color of the cathode ray tube using this

$$(Y_{0.95},Eu_{0.05})_2O_2S$$

red emitting phosphor at a current density of electron beam of 0.1 μA/cm$^2$ is the same as the emission color of the above-described cathode ray tube in accordance with the present invention at the same current density, and is represented by the chromaticity point A. Accordingly, the emission color of this cathode ray tube changes from the chromaticity point A to the chromaticity point C when the current density of the electron beam increases from 0.1 μA/cm$^2$ to 4.0 μA/cm$^2$.

As is clear from the comparison of the length of the straight line connecting the chromaticity point A with the chromaticity point B with the length of the straight line connecting the chromaticity point A and the chromaticity point C, the range of emission color changing when the current density of the electron beam increases from 0.1 μA/cm$^2$ to 4.0 μA/cm$^2$ is wider in the cathode ray tube in accordance with the present invention than in the cathode ray tube using the aforesaid

$$(Y_{0.95},Eu_{0.05})_2O_2S$$

red emitting phosphor. The changing range of the emission color is calculated by the formula

$$\sqrt{\Delta u^2+\Delta v^2}.$$

When the current density of the electron beam increases from 0.1 μA/cm$^2$ to 4.0 μa/cm$^2$, the

$$\sqrt{\Delta u^2+\Delta v^2}$$

value of the cathode ray tube in accordance with the present invention is 0.195, while the value for the cathode ray tube using the

$$(Y_{0.95},Eu_{0.05})_2O_2S$$

phosphor is 0.165.

The use of phosphors in accordance with the present invention makes it possible to change the emission colour and conduct multi-colour display, by changing the energy of the excitation electron beam. An electron-excited fluorescent display device of the invention is applicable to multi-colour cathode ray tubes in, for example, terminal display units of computers and display units of aircraft control system.

**Claims**

1. An electron-excited fluorescent display device which comprises a current modulation-type multi-colour cathode ray tube having a current modulation electron gun which can emit an electron beam of variable current density; a non-pattern fluorescent screen on which the electron beam can impinge; and one or more deflection coils for generating a magnetic field in a direction normal to the electron beam, and thereby deflecting the beam and causing excitation of the entire surface of the screen; in which the screen comprises, as the main component thereof, a first phosphor which is a rare earth yellow-to-red-emitting phosphor of the formula

$$(Ln_{l-x-y},Eu_x,Ce_y)_2O_2S$$

in which Ln is selected from Y, Gd, La and Lu,

$$10^{-4}\leqq x\leqq 9\times 10^{-2}$$

and

$$10^{-6}\leqq y\leqq 2\times 10^{-3},$$

and which exhibits sub-linear current density emission luminance characteristics when the electron beam current density is increased, and a second phosphor exhibiting an emission colour different from the first phosphor and linear or super-linear current density emission luminance characteristics when the electron beam current density is increased.

2. A device according to claim 1, wherein the screen has a two-layer construction, one layer constituted by the first phosphor and the other layer constituted by the second phosphor.

3. A device according to claim 2, wherein the layer constituted by the first phosphor is nearer to the electron gun.

4. A device according to claim 1, wherein the screen is of a single layer comprising a mixture of the first and second phosphors.

5. A device according to claim 4, wherein the mixture comprises grains of the first phosphor stuck to the surfaces of grains of the second phosphor.

6. A device according to any preceding claim, wherein $2\times 10^{-6}\leqq y\leqq 10^{-3}$.

7. A device according to any preceding claim, wherein $10^{-2}\leqq x\leqq 8\times 10^{-2}$.

8. A device according to any preceding claim,

wherein the second phosphor is a blue-to-green-emitting phosphor.

9. A device according to claim 8, wherein the second phosphor is a silver-activated zinc cadmium sulphide phosphor containing a metal selected from Fe, Co and Ni, or an aluminium-activated zinc sulphide phosphor containing a metal selected from Fe, Co and Ni, or a mixture thereof.

**Patentansprüche**

1. Durch Elektronen angeregte Fluoreszenz-Aufzeichnungsvorrichtung, die umfaßt: eine Vielfarben-Kathodenstrahlrohr von Strommodulationstyp mit einer Strommodulations-Eletronenkanone, die einen Elektronenstrahl von variabler Stromdichte emittieren kann; einen nicht gemusterten Fluoreszenzschirm, auf dem der Elektronenstrom aufprallen kann; und eine oder mehrere Ablenkungsspulen zur Erzeugung eines magnetischen Feldes in einer senkrechten Richtung zum Elektronenstrom und um dadurch gen Strom abzulenken und eine Anregung der gesamten Oberfläche des Schirmes zu bewirken; wobei der Schirm als seine Hauptkomponente einen ersten Leuchtstoff umfaßt, der ein gelb- bis rot-emittierender Leuchtstoff von seltenen Erden der allgemeinen Formel ist

$$(Ln_{1-x-y},Eu_x,Ce_y)_2O_2S,$$

in der Ln aus Y, Gd, La und Lu ausgewählt ist,

$$10^{-4} \leqq x \leqq 9\times10^{-2} \text{ und } 10^{-6} \leqq y \leqq 2\times10^{-3}$$

beträgt, und der sublineare Stromdichteemissionsluminanz-Eigenschaften aufweist, wenn die Stromdichte des Elektronenstroms erhöht wird, und einen zweiten Leuchtstoff, der eine Farbemission aufweise, die vom ersten Leuchtstoff verschieden ist und lineare oder superlineare Stromdichteemissionsluminanz-Eigenschaften aufweist, wenn die Stromdichte des Elektronenstroms erhöht wird.

2. Vorrichtung nach Anspruch 1, worin der Schirm einen Zweischichtenaufbau hat, eine Schicht durch den ersten Leuchtstoff gebildet wird und die andere Schicht durch den zweiten Leuchtstoff gebilder wird.

3. Vorrichtung nach Anspruch 2, worin die Schicht, die durch den ersten Leuchtstoff gebildet wird, näher zur Elektronenkanone liegt.

4. Vorrichtung nach Anspruch 1, worin der Schirm aus einer einzelnen Schicht besteht, die eine Mischung der ersten und zweiten Leuchtstoffe umfaßt.

5. Vorrichtung nach Anspruch 4, worin die Mischung Körner des ersten Leuchtstoffes umfaßt, die an der Oberfläche der Körner des zweiten Leuchtstoffes haften.

6. Vorrichtung nach einem der vorstehenden Ansprüche, worin $2\times10^{-6} \leqq y \leqq 10^{-3}$ ist.

7. Vorrichtung nach einem der vorstehenden Ansprüche, worin $10^{-2} \leqq x \leqq 8\times10^{-2}$ ist.

8. Vorrichtung nach einem der vorstehenden Ansprüche, worin der zweite Leuchtstoff ein blau- bis grün-emittierender Leuchtstoff ist.

9. Vorrichtung nach Anspruch 8, worin der zweite Leuchtstoff ein durch Silber aktivierter Zinkcadmiumsulfid-Leuchtstoff ist, der ein Metall enthält, das aus Fe, Co und Ni ausgewählt ist, oder ein mit Aluminium aktivierter Zinksulfid-Leuchtstoff ist, der ein Metall enthält, das aus Fe, Co und Ni einer Mischung davon ausgewählt ist.

**Revendications**

1. Dispositif de visualisation fluorescent à électron excité, caractérisé en ce qu'il comprend un tube à rayon cathodique multicolore à modulation de courant ayant un canon électronique à modulation de courant qui peut émettre un faisceau électronique à densité de courant variable; un écran fluorescent sans mire sur lequel le faisceau d'électrons peut incider; et une ou plusieurs bobines déflectrices pour créer un champ magnétique dans une direction perpendiculaire au faisceau électronique, et dévier ainsi le faisceau et provoquer l'activation de toute la surface de l'écran; qui comprend, comme composant principal, une première substance fluorescente qui est une terre rare émettant du jaune au rouge, de formule.

$$(Ln_{1-x-y},Eu_x,Ce_y)_2O_2S$$

dans laquelle Ln est choisi à partir de Y, Gd, La et Lu,

$$10^{-4} \leqq x \leqq 9\times10^{-2} \text{ et } 10^{-6} \leqq y \leqq 2\times10^{-3},$$

et qui présente une luminance d'émission à densité de courant sublinéaire lorsque la densité de courant du faisceau électronique est augmentée, et une seconde substance fluorescente présentant une couleur d'émission différente de la première substance fluorescente et une luminance d'émission à densité de courant linéaire ou super-linéaire lorsque la densité de courant du faisceau électronique est augmentée.

2. Dispositif de visualisation selon la revendication 1, caractérisé en ce que l'écran est construit en deux couches, une couche étant constituée par la seconde substance fluorescente et l'autre couche constituée par la second substance fluorescente.

3. Dispositif de visualisation selon la revendication 2, caractérisé en ce que la couche constituée par la première substance fluorescente est plus proche du canon électronique.

4. Dispositif de visualisation selon la revendication 1, caractérisé en ce que l'écran est constitué d'une couche simple comprenant un mélange de la première et de la seconde substance fluorescente.

5. Dispositif de visualisation selon la revendication 4, caractérisé en ce que le mélange comprend des grains de la première substance fluorescente fixés à la surface des grains de la seconde substance fluorescente.

6. Dispositif de visualisation selon l'une quelconque des revendications précédentes, caractérisé en ce que $2 \times 10^{-6} \leqq y \leqq 10^{-3}$.

7. Dispositif de visualisation selon l'une quelconque des revendications précédentes, caractérisé en ce que $10^{-2} \leqq x \leqq 8 \times 10^{-2}$.

8. Dispositif de visualisation selon l'une quelconque des revendications précédentes, caractérisé en ce que la seconde substance fluorescente est un phosphore émettant du bleu au vert.

9. Dispositif de visualisation selon la revendication 8, caractérisé en ce que la seconde substance fluorescente est un sulfure de cadmium et zinc activé par de l'argent contenant un métal choisi parmi, Fe, Co et Ni, ou un sulfure de zinc activé par de l'aluminium contenant un métal choisi parmi Fe, Co et Ni, ou un mélange de ces derniers.

F I G . I

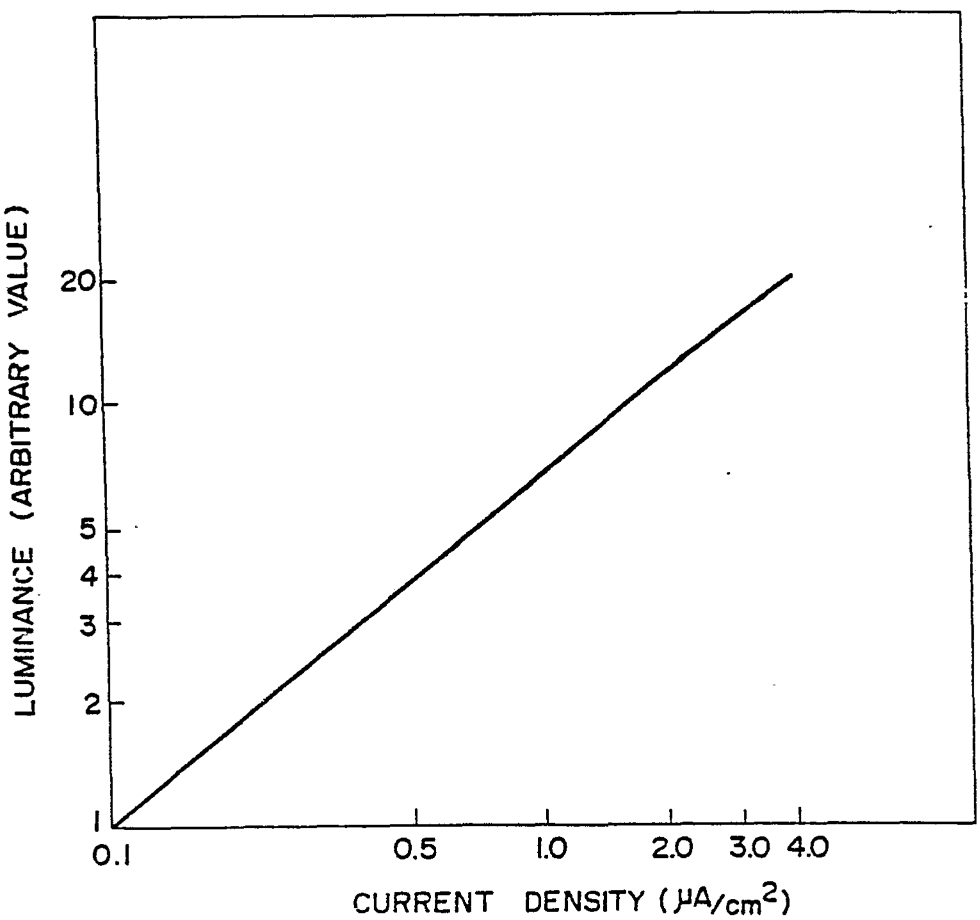
LUMINANCE (ARBITRARY VALUE)
20
10
5
4
3
2
1
0.1
0.5
1.0
2.0
3.0
4.0
CURRENT DENSITY (µA/cm2)

FIG.2

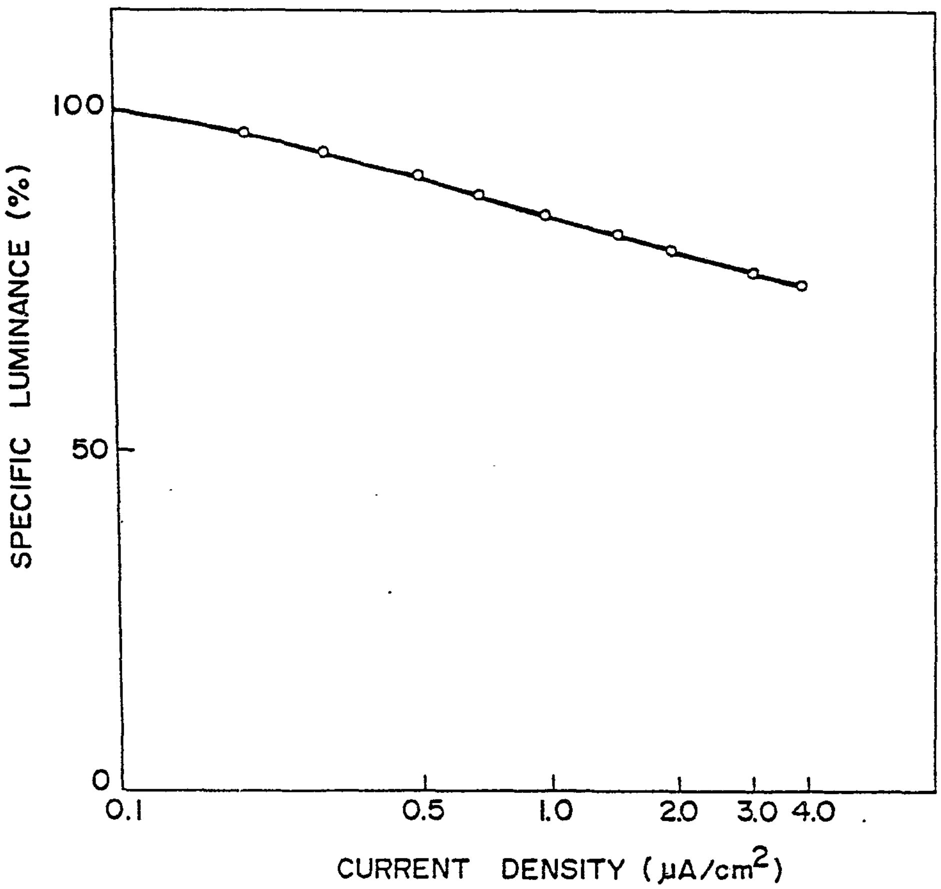
100
50
0
SPECIFIC LUMINANCE (%)
0.1
0.5
1.0
2.0
3.0
4.0
CURRENT DENSITY (μA/cm2)

FIG. 3

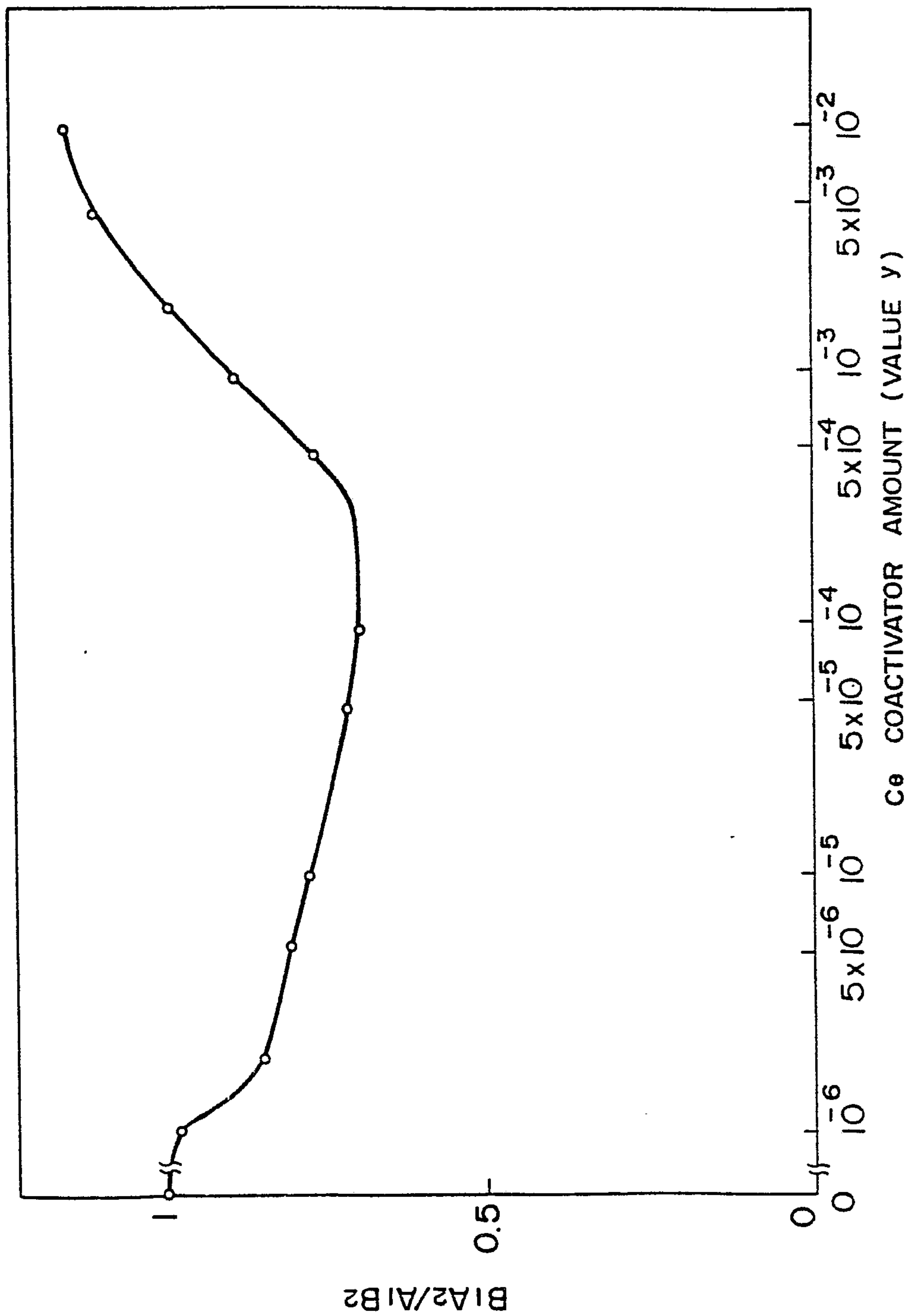

0
0.5
1
B1A2/A1B2
0
$10^{-6}$
$5\times10^{-6}$
$10^{-5}$
$5\times10^{-5}$
$10^{-4}$
$5\times10^{-4}$
$10^{-3}$
$5\times10^{-3}$
$10^{-2}$
Ce COACTIVATOR AMOUNT (VALUE y)

FIG. 4

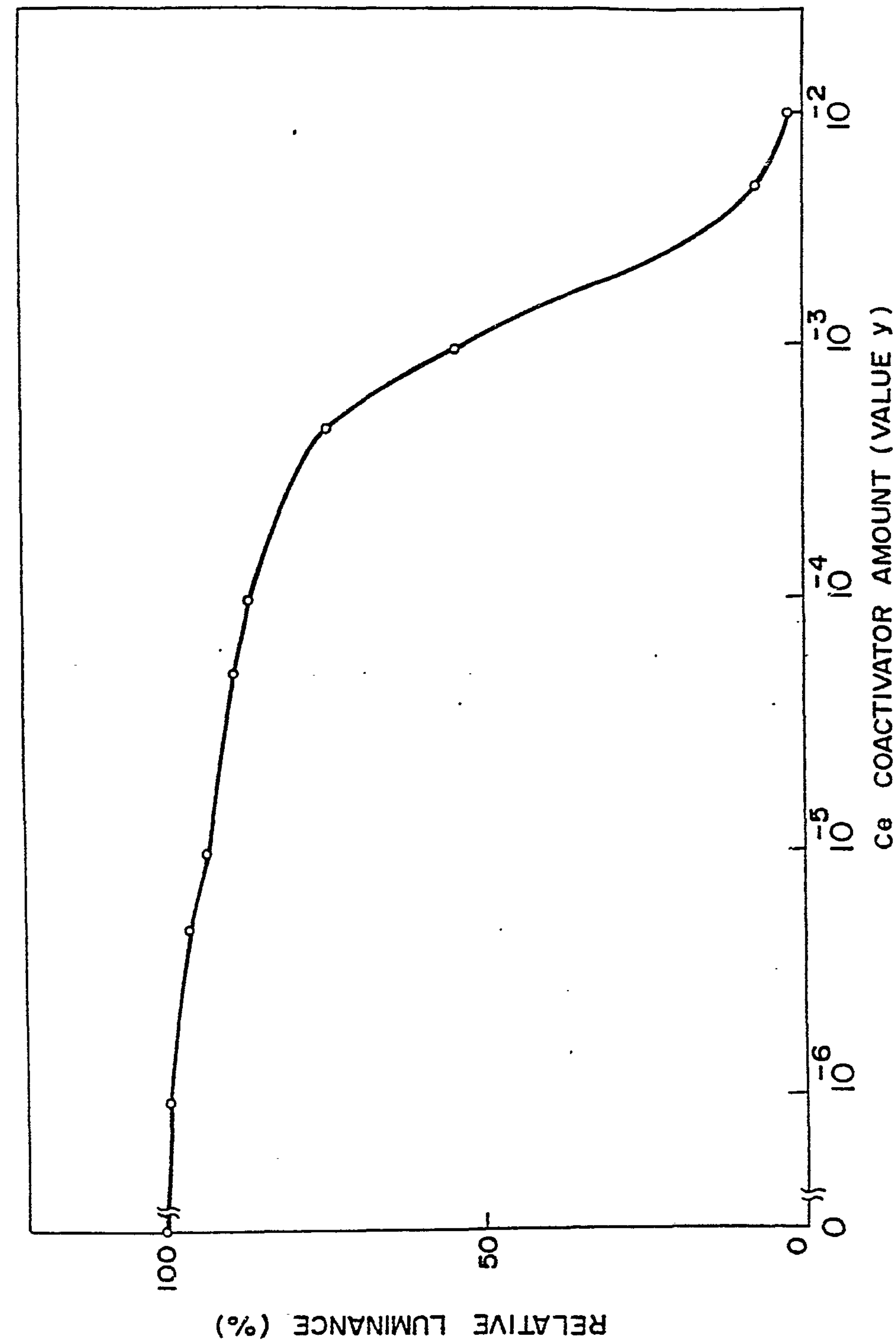

RELATIVE LUMINANCE (%)
100
50
0
0
$10^{-6}$
$10^{-5}$
$10^{-4}$
$10^{-3}$
$10^{-2}$
Ce COACTIVATOR AMOUNT (VALUE y)

FIG.5

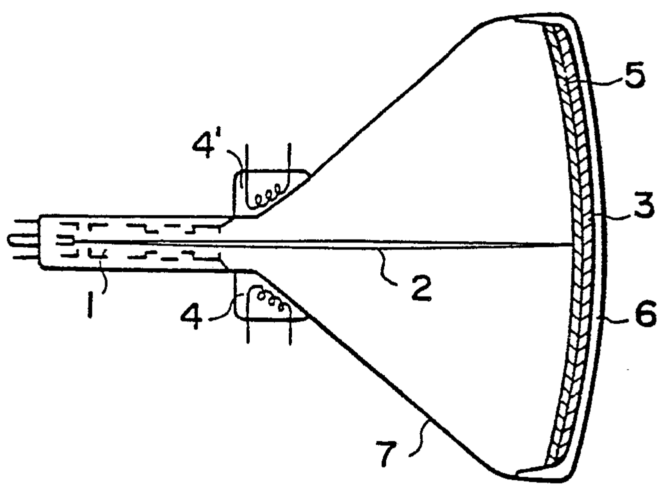

FIG. 6

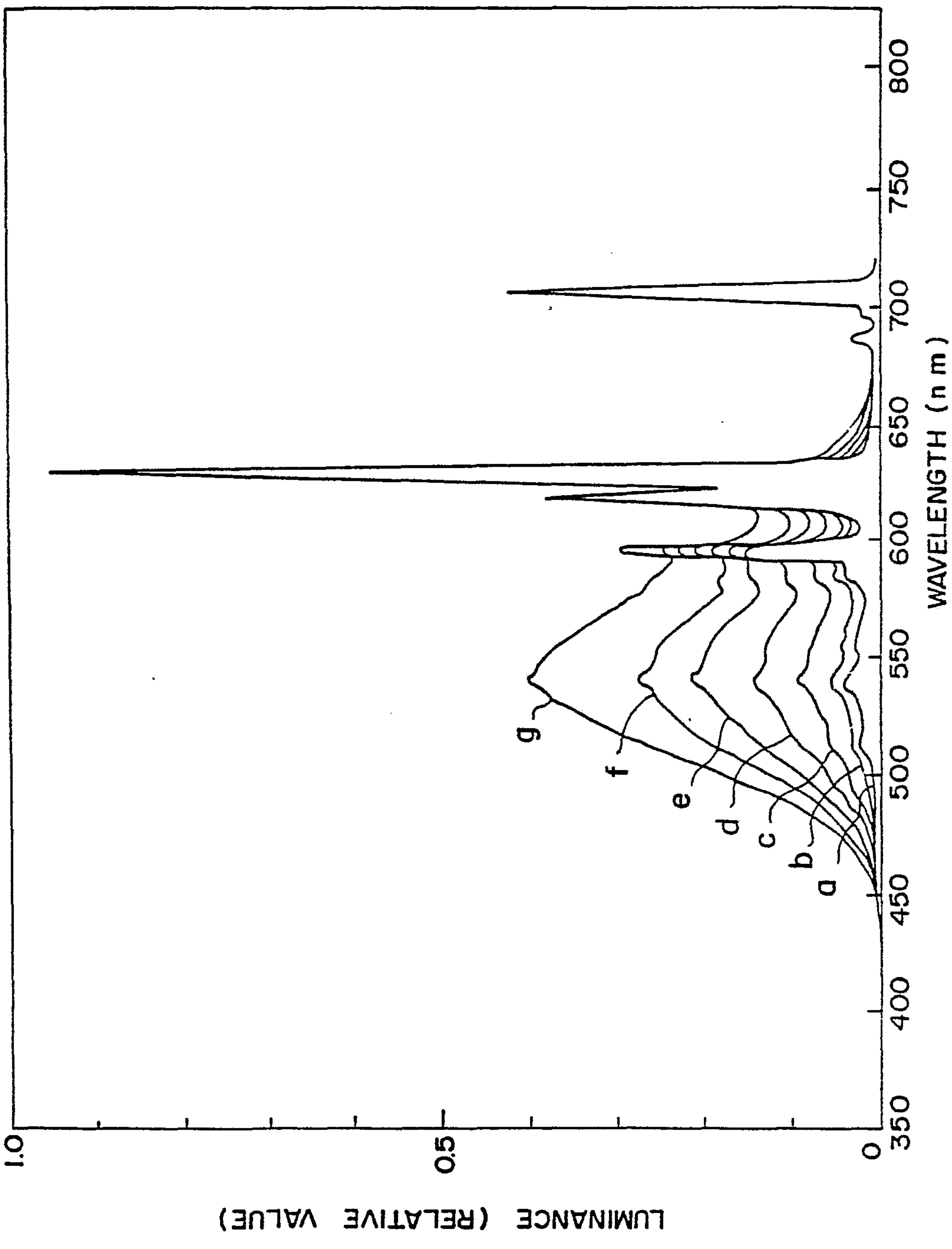

1.0
0.5
0
LUMINANCE (RELATIVE VALUE)
350
400
450
500
550
600
650
700
750
800
WAVELENGTH (n m)
a
b
c
d
e
f
g

F I G . 7